(19) Europäisches Patentamt
European Patent Office
Office européen des brevets

(11) Publication number: **0 229 720 B1**

(12) **EUROPEAN PATENT SPECIFICATION**

(45) Date of publication of patent specification: **06.05.92**

(51) Int. Cl.5: **C07F 7/18**, C07F 7/08, G03C 7/30

(21) Application number: **87300315.6**

(22) Date of filing: **15.01.87**

(54) **Organosilanes for enhancing photographic colour development.**

(30) Priority: **15.01.86 GB 8600933**

(43) Date of publication of application:
**22.07.87 Bulletin 87/30**

(45) Publication of the grant of the patent:
**06.05.92 Bulletin 92/19**

(84) Designated Contracting States:
**BE DE FR GB**

(56) References cited:
**EP-A- 0 032 036**
**DE-A- 2 745 546**
**DE-A- 2 823 932**
**DE-A- 3 033 865**
**FR-A- 1 521 881**

**JOURNAL OF ORGANOMETALLIC CHEMISTRY, vol. 177, 1979, pages C16-C18, Elsevier Sequoia, S.A., Lausanne, CH; L. BIRKOFER et al.: "Siliciumorganische Verbindungen LXXI. Sila-Paracyclophane"**

(73) Proprietor: **EASTMAN KODAK COMPANY (a New Jersey corporation)**
**343 State Street**
**Rochester New York 14650(US)**
(84) Designated Contracting States:
**BE DE FR**

(73) Proprietor: **KODAK LIMITED**
**P.O. Box 66 Station Road**
**Hemel Hempstead Herts, HP1 1JU(GB)**
(84) Designated Contracting States:
**GB**

(72) Inventor: **Moore, Christopher Peter**
**323 Torbay Road Rayners Lane**
**Harrow Middlesex HA2 9OD(GB)**

(74) Representative: **Nunney, Ronald Frederick Adolphe et al**
**Kodak Limited Patent Department Headstone Drive**
**Harrow Middlesex HA1 4TY(GB)**

EP 0 229 720 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

BULL. CHEMICAL SOCIETY OF JAPAN, vol. 38, no. 11, November 1965, pages 2011-2013, Tokyo, JP; M. ABE et al.: "The preparation of triorganosilyl derivatives of hydroquinone, resorcinol, bisphenol-A and terephthalic acid"

CHEMICAL ABSTRACTS, vol. 87, no. 13, 26th September 1977, pages 631,632, abstract no. 102402w, Columbus, Ohio, US; T.P. KOZLOVA et al.: "1,2-Naphthoquinone-2-diazide 5-sulfonyl ester of silicon-containing condensation products" & FIZ.-KHIM. OSN. SINT. PERERAB. POLIM. 1976, 1, 93-4

CHEMICAL ABSTRACTS, vol. 86, no. 7, 14th February 1977, page 507, abstract no. 43397c, Columbus, Ohio, US; & JP-A-76 105 043 (TOBISHI PHARMACEUTICAL CO., LTD) 17-09-1976

## Description

The invention relates to organosilanes for enhancing photographic colour development. More particularly, it relates to certain organosilanes for improving the density and contrast of dye images obtained by colour developing incorporated-coupler photographic silver halide materials.

A common form of colour photographic material comprises red-, green- and blue-sensitive silver halide emulsion layers in or adjacent to which are incorporated cyan-, magenta- and yellow-dye forming couplers, respectively. On development of such a material with a developer containing p-phenylenediamine colour developing agent, the oxidation product produced on reduction of the silver halide by the developing agent reacts with the appropriate coupler to give image dye. The silver, which merely obscures the dye image, is removed with a bleach solution and, usually, recovered.

Since only the dye image is needed, anything which can be done to reduce the amount of silver halide and/or dye-forming coupler needed to obtain the desired photographic speed and tone reproduction characteristics is likely to reduce the manufacturing cost of the photographic material. It has been discovered that certain organosilanes, described below, when incorporated together with couplers in photographic silver halide sensitive materials increase the image dye yield, in some instances by at least ten per cent.

Organic compounds containing silyl groups have not been widely used in sensitive photographic silver halide materials. Compounds including those of the general formula:

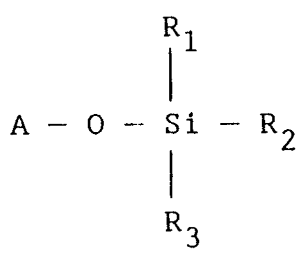

wherein A is an optionally substituted aryl group, or a chroman, spirochroman, indan or spiroindan ring, and $R_1$, $R_2$ and $R_3$ each represents a hydrogen or halogen atom, an alkyl group or an aryl group except that $R_1$, $R_2$ and $R_3$ cannot all be hydrogen have been proposed as dye image stabilisers in UK Patent Application 2 061 540A. The organosilanes of the present invention are structurally different from these compounds and are used for a different purpose.

The present invention provides a photographic material comprising a support bearing at least one developable silver halide emulsion layer and, incorporated in that layer or a water-permeable layer adjacent thereto, a dye-forming coupler, said material also containing, incorporated in the emulsion layer or a water-Permeable layer adjacent thereto, to enhance colour development, an organosilane wherein

(a) one or two aryloxy groups are directly attached to the silicon atom of the silane or are indirectly attached thereto through an alkylene group or an alkyleneoxy group,

(b) each aryloxy group is attached directly to an aryl group substituted with an active group or indirectly attached thereto through a single linking group, and

(c) the active group is a hydroxy, hydroxyalkoxy, organosilyloxy, organosilylalkoxy or organosilyloxyalkoxy group,

said organosilane being non-hydrolysable in basic aqueous media.

It will be readily apparent that certain structural limitations are imposed on the organosilane to render it non-hydrolysable in basic aqueous media. Thus, for example, the substituents on the silicon atom of the silane must provide sufficient steric hindrance to prevent hydrolysis. Also, when the silicon atom is attached to an aryloxy group indirectly through an alkylene group, the alkylene group should contain other than two carbon atoms due to the fact that a silylethoxy group attached to an electron-deficient aryl group is readily hydrolysed. Such limitations are well known. Further, whether or not an organosilane is hydrolysable is indicated by the presence or absence, respectively, of decomposition of the compound in an aqueous environment at a pH greater than 7.

Preferred organosilanes have the formula

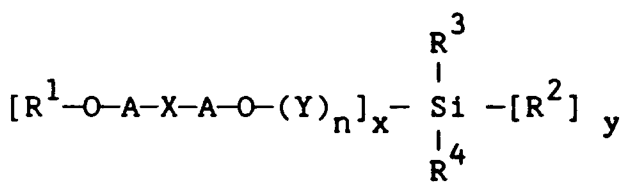

wherein

A is a substituted or unsubstituted aryl group;

X is a chemical bond directly linking the two A groups or a divalent linking group having no more than three atoms separating the two A groups;

Y is an alkylene group, other than ethylene, or an alkyleneoxy group;

$R^1$ is H-, $HO(CH_2)_m$- or $R^2R^3R^4Si(Y)_n$-;

$R^2$, $R^3$ and $R^4$ are each independently substituted or unsubstituted alkyl, cycloalkyl or aryl groups, provided that, when n is 0, at least one of $R^2$, $R^3$ and $R^4$ is a branched alkyl group, a substituted cycloalkyl group or a substituted aryl group;

m is an integer from 2 to 10;

n is 0 or 1;

x is 1 or 2, and,

y is 0 or 1, provided that $x + y = 2$.

The aryl groups represented by A, which are preferably phenyl groups, may be substituted. Suitable substituents include alkyl, aryl, acyl and sulphonyl groups, and halogen atoms.

The linking group X has no more than three and preferably has one or two atoms separating the linked A groups. Examples of suitable linking groups include $-SO_2-$, -SO-, -S-, -O-, -CO-, -COO-, -OCOO-, -CONH-, -OCONH-, $-SO_2NH-$ or $-CR^5R^6-$ wherein each of $R^5$ and $R^6$ is independently hydrogen, alkyl or aryl.

When Y is present, it is preferably an alkylene group having 1 or from 3 to 8 carbon atoms.

$R^1$ is preferably a hydrogen atom.

Preferably $R^2$, $R^3$ and $R^4$ are each independently a substituted or unsubstituted alkyl group having from 1 to 16 carbon atoms, a substituted or unsubstituted cycloalkyl group having from 3 to 6 carbon atoms or a substituted or unsubstituted aryl group having from 6 to 18 carbon atoms. When $R^2$, $R^3$ and $R^4$ form part of a silyloxy group, at least one of the groups is a branched alkyl group e.g. i-propyl or t-butyl, a substituted cycloalkyl group e.g. methylcyclohexyl, or a substituted aryl group e.g. t-butylphenyl. Suitable substituents for $R^2$, $R^3$ and $R^4$ include alkyl, aryl and sulphonyl groups and halogen atoms.

Particularly preferred organosilanes have the formula

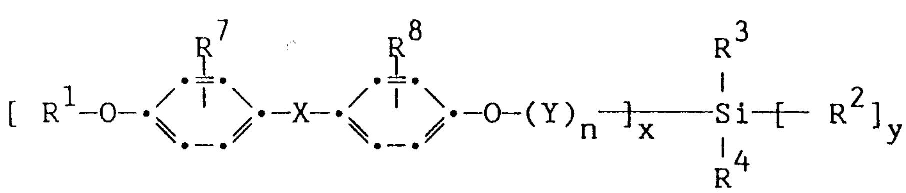

wherein

$R^1$ $R^2$, $R^3$, $R^4$, X, Y, n, x and y are as defined above; and,

$R^7$ and $R^8$ are each independently a hydrogen atom, an alkyl group having from 1 to 6 carbon atoms, an aryl group having from 6 to 18 carbon atoms or a halogen atom.

In another aspect, the invention provides organosilanes For use as photographic colour development enhancers having the formula

$$[R^1{-}O{-}A{-}X{-}A{-}O{-}(Y)_n]_x{-}\overset{\displaystyle R^3}{\underset{\displaystyle R^4}{\overset{|}{\underset{|}{Si}}}}{-}[R^2]_y$$

wherein

A is a substituted or unsubstituted aryl group;

X is a chemical bond directly linking the two A groups or $-SO_2-$, -SO-, -CO-, -COO-, -OCOO-, -CONH-, -OCONH-, or $-SO_2NH-$ ;

Y is an alkylene group, other than ethylene, or an alkyleneoxy group;

$R^1$ is H-, $HO(CH_2)m-$ or $R^2R^3R^4Si(Y)n-$;

$R^2$,$R^3$and $R^4$ are each independently substituted or unsubstituted alkyl, cycloalkyl or aryl groups, provided that, when n is 0, at least one of $R^2$,$R^3$ and $R^4$ is a branched alkyl group, a substituted cycloalkyl group or a substituted aryl group;

m is an integer from 2 to 10;

n is 0 or 1;

x is 1 or 2; and,

y is 0 or 1, provided that $x + y = 2$.

Particular examples of organosilanes used in the invention having the following Formula I are given in Table 1, being numbered for convenience of reference hereinafter:

TABLE 1

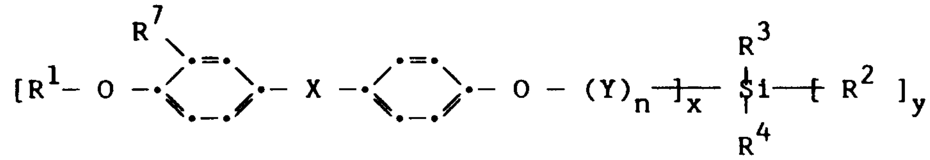 (I)

| Compd No. | $R^1$ | $R^7$ | X | Y | n | x | $R^2$ | $R^3$ | $R^4$ | y |
|---|---|---|---|---|---|---|---|---|---|---|
| 1 | H | H | $SO_2$ | – | 0 | 1 | $t–C_4H_9$ | $CH_3$ | $CH_3$ | 1 |
| 2 | $HO(CH_2)_2$ | H | $SO_2$ | – | 0 | 1 | $t–C_4H_9$ | $CH_3$ | $CH_3$ | 1 |
| 3 | $R^2R^3R^4Si$ | H | $SO_2$ | – | 0 | 1 | $t–C_4H_9$ | $CH_3$ | $CH_3$ | 1 |
| 4 | H | H | $SO_2$ | – | 0 | 1 | $t–C_4H_9$ | $C_6H_5$ | $C_6H_5$ | 1 |
| 5 | $HO(CH_2)_2$ | H | $SO_2$ | – | 0 | 1 | $t–C_4H_9$ | $C_6H_5$ | $C_6H_5$ | 1 |
| 6 | H | H | $SO_2$ | – | 0 | 1 | $i–C_3H_7$ | $i–C_3H_7$ | $i–C_3H_7$ | 1 |
| 7 | $HO(CH_2)_2$ | H | $SO_2$ | – | 0 | 1 | $i–C_3H_7$ | $i–C_3H_7$ | $i–C_3H_7$ | 1 |
| 8 | H | H | $SO_2$ | – | 0 | 2 | – | $t–C_4H_9$ | $t–C_4H_9$ | 0 |
| 9 | H | H | $SO_2$ | $CH_2$ | 1 | 1 | $CH_3$ | $CH_3$ | $CH_3$ | 1 |

TABLE 1 (continued)

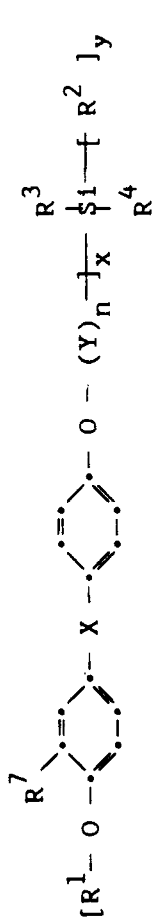

(I)

| Compd No. | $R^1$ | $R^7$ | X | Y | n | x | $R^2$ | $R^3$ | $R^4$ | y |
|---|---|---|---|---|---|---|---|---|---|---|
| 10 | $HO(CH_2)_2$ | H | $SO_2$ | $CH_2$ | 1 | 1 | $CH_3$ | $CH_3$ | $CH_3$ | 1 |
| 11 | H | H | $SO_2$ | $(CH_2)_3$ | 1 | 1 | $CH_3$ | $CH_3$ | $CH_3$ | 1 |
| 12 | H | H | CO | — | 0 | 1 | $t-C_4H_9$ | $CH_3$ | $CH_3$ | 1 |
| 13 | H | H | $C(CH_3)_2$ | — | 0 | 1 | $t-C_4H_9$ | $CH_3$ | $CH_3$ | 1 |
| 14 | H | H | S | — | 0 | 1 | $t-C_4H_9$ | $CH_3$ | $CH_3$ | 1 |
| 15 | H | H | SO | — | 0 | 1 | $t-C_4H_9$ | $CH_3$ | $CH_3$ | 1 |
| 16 | $R^2R^3R^4Si$ | H | $SO_2$ | $(CH_2)_2O$ | 1 | 1 | $i-C_3H_7$ | $i-C_3H_7$ | $i-C_3H_7$ | 1 |
| 17 | $HO(CH_2)_2$ | H | $SO_2$ | — | 0 | 1 | $t-C_4H_9$ | $C_6H_5$ | $C_6H_5$ | 1 |
| 18 | H | Br | $SO_2$ | — | 0 | 1 | $t-C_4H_9$ | $CH_3$ | $CH_3$ | 1 |

As described in detail hereinafter in the specific examples of the preparation of compounds of the invention, the organosilanes may be made by reacting a halosilane with a compound comprising a first aryl group attached directly or indirectly through a single linking group to a second aryl group wherein the aryl groups are substituted with a hydroxyl group at each intended point of attachment of a silyl group. The reaction provides a compound having at least one silyl group attached directly or indirectly through an

alkylene or alkyleneoxy group to an aryloxy group. The halosilane is chosen to provide the optional alkylene or alkyleneoxy link between the silyl group and the aryloxy group. Further, a halosilane having two halogen atoms can be used to provide a compound having two aryloxy groups attached directly or indirectly to the silicon atom of the silane. The halosilane is conveniently a chlorosilane. When a free hydroxyl group is required in the final product, this group can be protected during the reaction and then regenerated.

In another aspect, the invention provides a photographic material comprising a support bearing at least one developable silver halide emulsion layer and, incorporated in that layer or a water-permeable layer adjacent thereto, a dye-forming coupler, said material also containing, incorporated in the emulsion layer or a water-permeable layer adjacent thereto, to enhance colour development, an organosilane of the invention.

A photographic image may be produced from the photographic material after imagewise exposure of the material to activating radiation by developing the exposed material in an aqueous alkaline solution in the presence of a developing agent.

The organosilane is used in an amount sufficient to enhance dye formation e.g. from 0.25 to 2.0 mole per mole of coupler, preferably from 0.5 to 1.0 mole per mole of coupler.

Because the organosilane is used to increase the efficiency of dye formation, it must be incorporated in the silver halide emulsion layer or a layer adjacent thereto i.e. on the same side of the support. It can be incorporated as a separate dispersion, but is preferably incorporated in admixture with the coupler. If the compound is an oil-former, it may be dispersed in aqueous gelatin as an oily solution or mixture with the coupler, Usually, however, it is convenient to include in the solution or mixture, as an oil-former, a conventional coupler solvent, such as dibutyl phthalate. As in the production of ordinary coupler dispersions, a volatile and/or water-miscible auxiliary solvent, such as ethyl acetate, may be used to aid the dispersion process and then removed by evaporation or by washing the set dispersion. Also, the dispersion process can be assisted by the presence of a surface active compound, as usual in the manufacture of coupler dispersions.

Photographic materials of the invention can be single colour materials or multicolour materials. Multicolour materials contain dye image-forming units sensitive to each of the three primary regions of the visible spectrum. Each unit may comprise a single emulsion layer or multiple emulsion layers sensitive to a given region of the spectrum. The layers of the material, including the layers of the image-forming units, can be arranged in various orders as known in the art. In an alternative format, the emulsions sensitive to each of the three primary regions of the spectrum may be disposed as a single segmented layer, e.g., as by the use of microvessels as described in U.S. Patent 4,362,806.

A typical multicolour photographic material of the invention comprises a support having thereon a cyan dye image-forming unit comprising at least one red-sensitive silver halide emulsion layer having associated therewith at least one cyan dye-forming coupler, a magenta dye image-forming unit comprising at least one green sensitive silver halide emulsion layer having associated therewith at least one magenta dye-forming coupler and a yellow dye image-forming unit comprising at least one blue-sensitive silver halide emulsion layer having associated therewith at least one yellow dye-forming coupler, at least one Of the emulsion layers in the material having associated therewith an organosilane compound of the invention. The expression "associated therewith" signifies that the organosilane and the coupler are in the silver halide emulsion layer or in an adjacent location where, during processing, they will be capable of reacting with silver halide development products. The material may contain additional layers e.g. filter layers, interlayers, overcoat layers, subbing layers, etc.

In the following discussion of suitable materials for use in the emulsions and elements of this invention, reference will be made to Research Disclosure, December 1978, Item 17643, published by Industrial Opportunities Ltd., The Old Harbourmaster's, 8 North Street, Emsworth, Hants P010 7DD, U.K. This publiciation will be identified hereafter as "Research Disclosure". References giving information on couplers and on methods for their dispersions are given in Sections VII and XIV, respectively, of Research Disclosure.

The couplers commonly employed in photographic materials are water-insoluble compounds often containing ballast groups, phenolic (including naphtholic) couplers being used for producing cyan dyes and compounds containing an activated methylene group, including both heterocyclic and open-chain compounds, being used for producing magenta and yellow dyes. Important magenta couplers are pyrazolones and important yellow couplers are benzoylacetanilides. Patents describing couplers include the following United States Patents:

Cyan dye-forming
3 367 531 3 034 892
2 423 730 3 311 476
2 474 293 3 419 390

2 772 826 3 458 315
2 895 826 3 476 563
Magenta Dye forming
2 343 703 3 062 653
2 369 489 3 127 269
2 600 788 3 311 476
2 908 573 3 419 391
2 933 391 3 518 429
Yellow dye-forming
2 298 443 3 277 155
2 407 210 3 408 194
2 875 057 3 415 652
2 908 573 3 447 928
3 265 506 3 933 501

In addition to the couplers described above, the materials of the invention may include additional couplers as described in Research Disclosure Section V11, paragraphs D, E, F and G and the publications cited therein. These couplers may be incorporated in the materials and emulsions as described in Research Disclosure Section VII, paragraph C and the publications cited therein.

An account of dye-forming development is given in 'Modern Photographic Processing', Vol. 2, Grant Haist, Wiley, New York, 1978, Chapter 9.

The organosilanes of the invention are useful in any incorporated-coupler silver halide photographic materials, including monochrome materials, false-colour materials and colour transparency, negative and print materials, to enhance the yield of image dye obtained on development with a solution including a p-phenylenediamine colour developing agent. Such developing agents are well-known, being described in,for example Photographic Processing Chemistry, L.F.A. Mason, Focal Press, London, 2nd edition (1975) pp 229-235 and Modern Photographic Processing,, Grant Haist, Wiley, New York (1979), Volume 2 pp 463-8.

The silver halide emulsion employed in the elements of this invention can be either negative-working or positive-working. Suitable emulsions and their preparation are described in Research Disclosure Sections I and II and the publications cited therein. Suitable vehicles for the emulsion layers and other layers of elements of this invention are described in Research Disclosure Section IX and the publications cited therein.

The photographic elements of this invention or individual layers thereof, can contain brighteners (see Research Disclosure Section V), antifoggants and stabilizers (see Research Disclosure Section VI), antistain agents and image dye stabilizer (see Research Disclosure Section VII, paragraphs I and J), light absorbing and scattering materials (see Research Disclosure Section VIII), hardeners (see Research Disclosure Section XI), plasticizers and lubricants (see Research Disclosure Section XII), antistatic agents (see Research Disclosure Section XIII), matting agents (see Research Disclosure Section XVI) and development modifiers (see Research Disclosure Section XXI).

The photogaphic elements can be coated on a variety of supports as described in Research Disclosure Section XVII and the references described therein.

Photographic elements can be exposed to actinic radiation, typically in the visible region of the spectrum, to form a latent image as described in Research Disclosure Section XVIII and then processed to form a visible dye image as described in Research Disclosure Section XIX. Processing to form a visible dye image includes the step of contacting the element with a colour developing agent to reduce developable silver halide and oxidize the colour developing agent. Oxidized colour developing agent in turn reacts with the coupler to yield a dye.

Preferred colour developing agents are p-phenylene diamines. Especially preferred are 4-amino-3-methyl-N,N-diethylaniline hydrochloride, 4-amino-3-methyl-N-ethyl-N-β-(methanesulphonamido)-ethylaniline sulphate hydrate, 4-amino-3-methyl-N-ethyl-N-β-hydroxyethylaniline sulphate, 4-amino-3-β-(methanesulphonamido)-ethyl-N,N-diethylaniline hydrochloride and 4-amino-3-methyl-N-ethyl-N-(2-methoxyethyl)aniline-di-p-toluenesulphonic acid.

With negative working silver halide emulsions this processing step leads to a negative image. To obtain a positive (or reversal) image, this step can be preceded by development with a non-chromogenic developing agent to develop exposed silver halide, but not form dye, and then uniform fogging of the element to render unexposed silver halide developable. Alternatively, a direct positive emulsion can be employed to obtain a positive image.

Development is followed by the conventional steps of bleaching, fixing, or bleach-fixing, to remove silver and silver halide, washing and drying.

Specific examples of the preparation of some of the organosilanes listed in Table 1 are as follows:

Preparation of Compound 1

a) Preparation of 4-(4-benzyloxyphenyl-sulphonyl)phenoxy-t-butyldimethyl silane.

The compound of formula (100mmol, 34g):

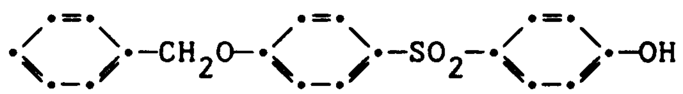

was dissolved with t-butylchlorodimethyl silane (100mmol, 15g) in dimethyl formamide (70ml). Imidazole (250mmol, 17g) was then added and the mixture was stirred at 40° C for 16 hours. It was then poured into of water (1000ml), extracted with three 150ml quantities of ethyl acetate, and the extract washed with two 100 ml quantities of 2M aqueous sodium hydroxide, 100ml of water and dried. The ethyl acetate was then evaporated off to leave a crude product which was recrystallised from ethanol.

b)Debenzylation

The product of part (a) (78mmol) was dissolved in ethyl acetate (250ml) and palladium on charcoal (0.1 weight equivalents) (Pd = 10% by weight based on the weight of the charcoal) was added. The mixture was hydrogenated overnight at 20-30 atmospheres pressure and 50-60°C. The charcoal was removed by filtering through kieselguhr, the ethyl acetate was evaporated off, and the product was then purified by recrystallisation to give 57 mmol of product having a melting point of 114-6°C. The yield of product was 73%.

Preparation of Compounds 4,6,9 and 11

The following additional compounds were made by the methods described in parts (a) and (b) of the Preparation of Compound 1. In carrying out part (a) of the synthesis, 100mmol of the appropriate substituted silane was used.

Table 2

| Compound | Silane | Yield,% | M.Pt.oC |
|---|---|---|---|
| 4 | $ClSi(C_6H_5)_2C_4H_9$-t | 86 | 117-9dec |
| 6 | $ClSi(C_3H_7\text{-}i)_3$ | 88 | 129-137 |
| 9 | $ClCH_2Si(CH_3)_3$ | 80 | 152-3 |
| 11 | $MePhSO_2O(CH_2)_3Si(CH_3)_3$ | 84 | viscous oil |

Preparation of Compound 3

A bis(trialkylsilylether) (compound 3) was prepared by reacting 4,4'-dihydroxyphenylsulphone with a twice molar quantity of t-butylchlorodimethylsilane using reaction conditions similar to those described in part (a) of the Preparation of Compound 1. A yield of 58% was obtained, and the purified product had a melting point of 130-2°C.

Preparation of Compounds 12 and 13

Mixtures of mono-and bis-silylethers, for subsequent separation, were prepared by reacting a starting compound of the general formula:

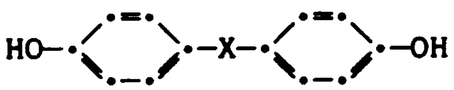

(II)

wherein X is -CO or $-C(CH_3)_2-$ with t-butylchlorodimethylsilane. The reactants were dissolved in dimethylformamide and imidazole was then added. The reaction mixture was kept at room temperature for 16 hours and the products then separated by column chromatography.

The yields and melting points of the purified compounds were as given in Table 3.

Table 3

| Compound | X | Silylether groups | Yield,% | M.Pt.oC |
|---|---|---|---|---|
| 12 | -CO-<br>" | 1<br>2 | 45<br>19 | 96-8<br>53-6 |
| 13 | $-C(CH_3)_2-$<br>" | 1<br>2 | 46<br>16 | 87-8<br>48-9 |

Preparation of Compound 8

Compound 8 was prepared from the starting compound used in Example 1(a) by reaction with half the molar quantity of di-t-butyldichlorosilane. The reaction was carried out in dimethylformamide at room temperature in the presence of imidazole. After 16 hours, the product was debenzylated by reduction with hydrogen in the presence of palladium carbon catalyst for eight hours at 50 °C. The yield was 54% and the product had a melting point of 150 °C.

Preparation of Compounds 2,5,7 and 10

4-(4-benzyloxyphenylsulphonyl)phenol was reacted for four hours at 160 °C with ethylene carbonate in the presence of tetra-n-butylammonium bromide. The product, of formula:

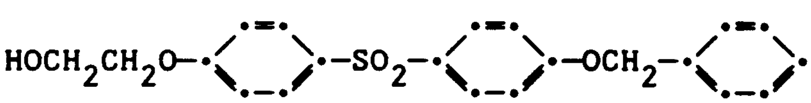

was debenzylated by reduction for 16 hours at 60 °C with hydrogen when dissolved in tetrahydrofuran containing suspended palladium-carbon catalyst. The debenzylated compound was then reacted with chlorosilanes to give various organosilanes as shown in Table 4.

Table 4

| Compound | Chlorosilane | Yield % | M.Pt.oC |
|---|---|---|---|
| 2 | $ClSi(CH_3)_2C_4H_9$-t | 62 | 107-110 |
| 5 | $ClSi(C_6H_5)_2C_4H_9$-t | 73 | oil |
| 7 | $ClSi(i\text{-}C_3H_7)_3$ | 25 | gum |
| 10 | $ClCH_2Si(CH_3)_3$ | 75 | 88-95 |

The invention is illustrated by the following Examples.

Examples 1 to 10

The photographic effects of various organosilanes of the invention were measured as described below. The coupler used was the yellow dye-forming coupler of the formula:

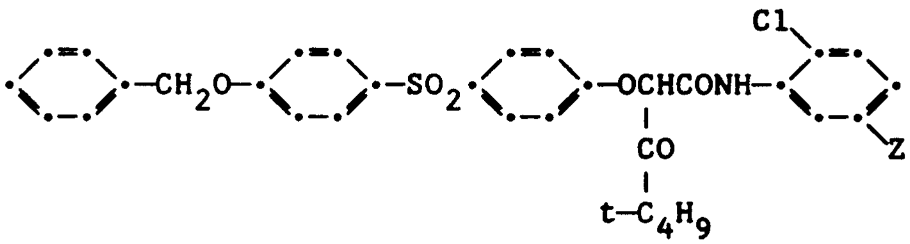

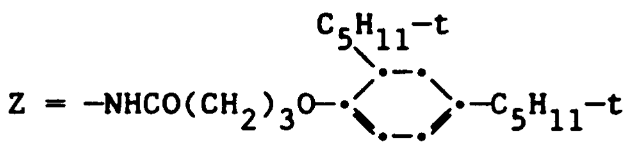

A dispersion of the coupler, a coupler solvent and any organosilane to be tested was made in aqueous gelatin solution. The amounts of the constituents were as follows:

| | |
|---|---|
| Coupler | 11.3 g(12.4mmol) |
| Coupler solvent (dibutylphthalate) | 5.6 g |
| Test compound | 6.2 mmol |
| 10% w/v aqueous gelatin | 70.5 g |
| Water to make: | 150 g |

A control dispersion was made which did not contain an organosilane.

An auxiliary solvent and a surfactant were used to assist the dispersion step which was carried out in a homogeniser.

The various dispersions were mixed with a silver chlorobromide photographic emulsion and coated on a resin-coated paper support. A supercoat of hardened gelatin was also applied to give a coating of the following composition.

| Gelatin 1g $m^{-2}$; hardener | |
|---|---|
| Coupler<br>Coupler solvent<br>Test compound<br>Gelatin<br>Silver halide | 1.0 g $m^{-2}$(1.1mmol)<br>0.5 g $m^{-2}$<br>0.55 mmol<br>1.4 g $m^{-2}$<br>3.5 mmol $m^{-2}$ |
| Support | |

A sample of each coating was exposed to a sensitometric wedge for 0.1 sec and then processed in a standard colour print process using a colour developer containing the colour developing agent 4-N-ethyl-N-(β-methanesulphonamidoethyl)amino-o-toluidine sesquisulphate and a bleach-fix solution. The wedge image was densitometrically assessed and the contrast and log speed, relative to the control, values are tabulated below.

Table 5

| Ex. No. | Compound (See Table 1) | Rel log Speed Increase (D = 1.0) | Contrast | Control Contrast |
|---|---|---|---|---|
| 1 | 1 | 0.08 | 2.82 | 2.41 |
| 2 | 2 | 0.10 | 3.04 | 2.60 |
| 3 | 4 | 0.07 | 2.69 | 2.41 |
| 4 | 5 | 0.05 | 2.81 | 2.32 |
| 5 | 6 | -0.01 | 2.94 | 2.41 |
| 6 | 8 | 0.08 | 2.93 | 2.60 |
| 7 | 9 | 0.06 | 2.90 | 2.41 |
| 8 | 10 | 0.07 | 3.02 | 2.60 |
| 9 | 12 | 0.06 | 2.74 | 2.60 |
| 10 | 18 | 0.05 | 2.82 | 2.32 |

It is evident from these results that all the compounds gave a significant increase in contrast, and only Compound 6 did not give a slight speed increase at D = 1.0. However, Compound 6 did produce a slight speed increase at higher density.

Example 11

The magenta-dye forming coupler of the following formula was used:

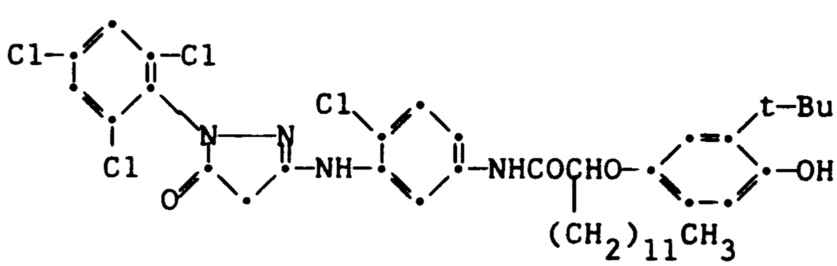

A dispersion of the coupler was made up in a way similar to that described in Example 1. The amounts of the constituents were as follows:

| | |
|---|---|
| Coupler | 2.0 g |
| Coupler Solvent (dibutyl phthalate) | 2.0 g |
| Test Compound No.1 | 0.85 g |
| 10 w/v aqueous gelatin | 40.0 g |
| Water to make | 50.0 g |

Auxiliary solvent and surfactant were used as before and the dispersions were mixed with a silver chlorobromide photographic emulsion and coated on a transparent support. A supercoat of hardened gelatin was applied to give a coating of the following composition

| Gelatin 1.07 g $m^{-2}$ | |
|---|---|
| Coupler | 0.69 mmol $m^{-2}$(0.54g $m^{-2}$) |
| Coupler solvent | 0.54 g $m^{-2}$ |
| Test compound | 0.69 mmol $m^{-2}$(0.25g $m^{-2}$) |
| Gelatin | 3.22 g $m^{-2}$ |
| Silver halide | 0.54 g $m^{-2}$ |
| Support | |

The coating was exposed and processed in accordance with the procedure of Example 1.

The contrast and log speed, relative to the control, values are shown below.

| | Contrast | Rel.log speed Increase (D = 1.0) |
|---|---|---|
| Control | 1.51 | |
| Compound 1 | 1.74 | 0.14 |

Example 12

A yellow-dye forming coupler of the following formula was used

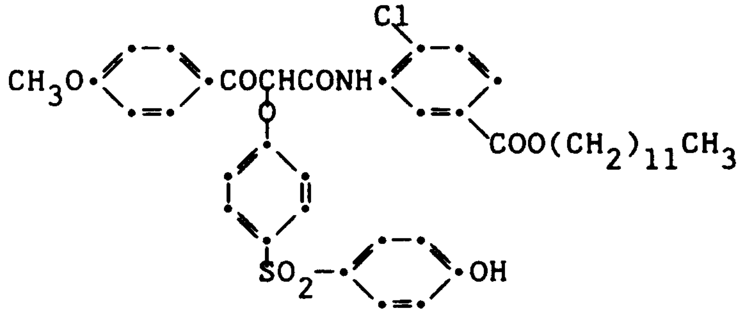

A dispersion of the coupler was made up in a way similar to that described in Example 1. The amounts of the constituents were as follows:

| | |
|---|---|
| Coupler | 5.50 g |
| Coupler solvent (dibutyl phthalate) | 2.75 g |
| Test compound No.1 | 1.17 g |
| 10% w/v aqueous gelatin | 33.33 g |
| Water to make | 18.36 g |

Auxiliary solvent and surfactant were used as before and the dispersions were mixed with a silver chlorobromide photographic emulsion and coated on a transparent support. A supercoat of hardened gelatin was applied to give a coating of the following composition.

| Gelatin 1.5 g $m^{-2}$ | |
|---|---|
| Coupler | 1.93 mmol $m^{-2}$ (1.65 g $m^{-2}$) |
| Coupler solvent | 0.825 g $m^{-2}$ |
| Test compound | 0.965 mmol $m^{-2}$ (0.35 g $m^{-2}$) |
| Gelatin | 2.42 g $m^{-2}$ |
| Silver halide | 0.81 g $m^{-2}$ |
| Support | |

The coating was exposed and processed in accordance with the procedure of Example 1.

The contrast and log speed, relative to the control, values are shown below.

| | Contrast | Rel.increase log speed at D = 0.2 |
|---|---|---|
| Control | 1.77 | |
| Compound 1 | 1.80 | 0.08 |

## Claims

**1.** A photographic material comprising a support bearing at least one developable silver halide emulsion layer and, incorporated in that layer or a water-permeable layer adjacent thereto, a dye-forming coupler, said material also containing, incorporated in the emulsion layer or a water-permeable layer adjacent thereto, to enhance colour development, an organosilane wherein

(a) one or two aryloxy groups are directly attached to the silicon atom of the silane or are indirectly attached thereto through an alkylene group or an alkyleneoxy group,

(b) each aryloxy group is attached directly to an aryl group substituted with an active group or indirectly attached thereto through a single linking group, and

(c) the active group is a hydroxy, hydroxyalkoxy, organosilyloxy, organosilylalkoxy or organosilyloxyalkoxy group,

said organosilane being non-hydrolysable in basic aqueous media.

**2.** A material according to claim 1 wherein the organosilane has the formula

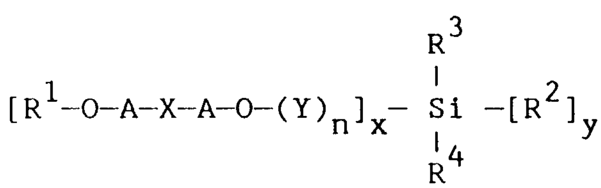

wherein

A is a substituted or unsubstituted aryl group;

X is a chemical bond directly linking the two A groups or a divalent linking group having no more than three atoms separating the two A groups;

Y is an alkylene group, other than ethylene, or an alkyleneoxy group;

$R^1$ is H-, $HO(CH_2)_m$- or $R^2R^3R^4Si(Y)_n$-;

$R^2$,$R^3$and $R^4$ are each independently substituted or unsubstituted alkyl, cycloalkyl or aryl groups, provided that, when n is 0, at least one of $R^2$,$R^3$ and $R^4$ is a branched alkyl group, a substituted cycloalkyl group or a substituted aryl group;

m is an integer from 2 to 10;

n is 0 or 1;
x is 1 or 2; and,
y is 0 or 1, provided that x + y = 2.

**3.** A material according to claim 2 wherein each A is a substituted or unsubstituted phenyl group.

**4.** A material according to claim 2 or claim 3 wherein X is $-SO_2-$ -SO-, -S-, -O-, -CO-, -COO-, -OCOO-, -CONH-, -OCONH-, $-SO_2NH-$ or $-CR^5R^6$ wherein each of $R^5$ and $R^6$ is independently hydrogen, alkyl or aryl.

**5.** A material according to any one of claims 2 to 4 wherein $R^2$, $R^3$ and $R^4$ are each independently a substituted or unsubstituted alkyl group having from 1 to 16 carbon atoms, a substituted or unsubstituted cycloalkyl group having from 3 to 6 carbon atoms or a substituted or unsubstituted aryl group having from 6 to 18 carbon atoms.

**6.** A material according to claim 1 wherein the organosilane has the formula

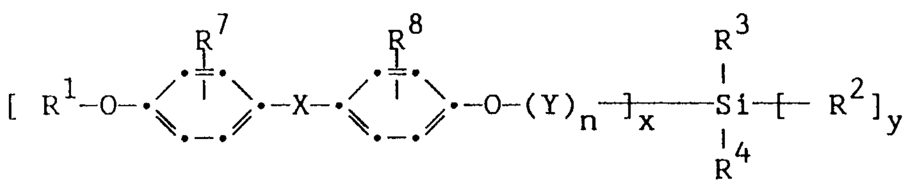

wherein
$R^1$,$R^2$,$R^3$,$R^4$,X,Y,n,x and y are as defined in claim 2; and,
$R^7$ and $R^8$ are each independently a hydrogen atom, an alkyl group having from 1 to 6 carbon atoms, an aryl group having from 6 to 18 carbon atoms or a halogen atom.

**7.** A material according to any one of the preceding claims wherein the organosilane is present in an amount from 0.25 to 2.0 mole per mole of coupler.

**8.** An organosilane having the formula

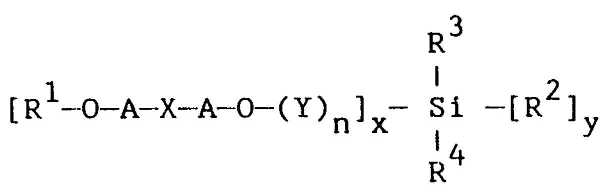

wherein
A is a substituted or unsubstituted aryl group;
X is a chemical bond directly linking the two A groups or $-SO_2-$, -SO-, -CO-, -COO-, -OCOO-, -CONH-, -OCONH-, or $-SO_2NH-$ ;
Y is an alkylene group, other than ethylene, or an alkyleneoxy group;
$R^1$ is H-, $HO(CH_2)_m-$ or $R^2R^3R^4Si(Y)_n-$;
$R^2$,$R^3$and $R^4$ are each independently substituted or unsubstituted alkyl, cycloalkyl or aryl groups, provided that, when n is 0, at least one of $R^2$,$R^3$ and $R^4$ is a branched alkyl group, a substituted cycloalkyl group or a substituted aryl group;
m is an integer from 2 to 10;
n is 0 or 1;
x is 1 or 2; and,
y is 0 or 1, provided that x + y = 2.

**9.** An organosilane according to claim 8 wherein each A is a substituted or unsubstituted phenyl group.

**10.** An organosilane according to claim 8 or claim 9 wherein $R^2$, $R^3$ and $R^4$ are each independently a substituted or unsubstituted alkyl group having from 1 to 16 carbon atoms, a substituted or unsubstituted cycloalkyl group having from 3 to 6 carbon atoms or a substituted or unsubstituted aryl group having from 6 to 18 carbon atoms.

**11.** An organosilane according to claim 8 having the formula

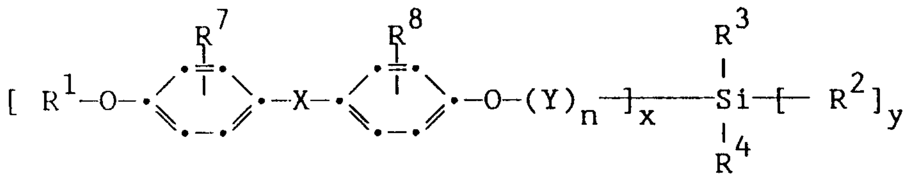

wherein

$R^1$,$R^2$,$R^3$,$R^4$,X,Y,n,x and y are as defined in claim 8; and,

$R^7$ and $R^8$ are each independently a hydrogen atom, an alkyl group having from 1 to 6 carbon atoms, an aryl group having from 6 to 18 carbon atoms or a halogen atom.

## Revendications

**1.** Produit photographique comprenant un support portant au moins une couche d'émulsion aux halogénures d'argent développable, et un coupleur formateur de colorant incorporé dans cette couche ou dans une couche adjacente perméable à l'eau, le produit contenant aussi un composé organosilane incorporé dans ladite couche d'émulsion ou dans une couche adjacente perméable à l'eau pour augmenter le développement chromogène dans lequel

(a) un ou deux groupes aryloxy sont liés à l'atome de silicium du silane soit directement, soit indirectement par l'intermédiaire d'un groupe alkylène ou alkylèneoxy,

(b) chaque groupe aryloxy est lié à un groupe aryle substitué par un groupe actif soit directement soit par l'intermédiaire d'un simple groupe de liaison, et

(c) le groupe actif est un groupe hydroxy, hydroxyalkoxy, organosilyloxy, organosilylalkoxy ou organosilyloxyalkoxy,

l'organosilane étant hydrolysable en milieu aqueux basique.

**2.** Produit selon la revendication 1 dans lequel l'organosilane a la formule

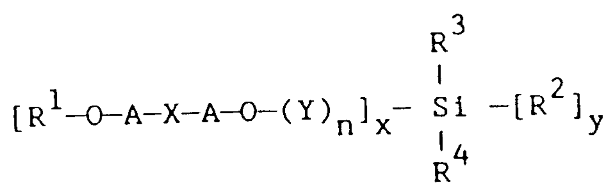

où

A est un groupe aryle substitué ou non,

X est une liaison chimique reliant directement les deux groupes A ou un groupe de liaison divalent avec au plus 3 atomes séparant les 2 groupes A ;

Y est un groupe alkylène autre que l'éthylène, ou un groupe alkylèneoxy ;

$R^1$ est H, $HO(CH_2)_m$- ou $R^2R^3R^4Si(Y)_n$- ;

$R^2$, $R^3$ et $R^4$ sont chacun séparément un groupe alkyle, cycloalkyle ou aryle substitué ou non, avec la condition supplémentaire que si $n = 0$, au moins un des groupes $R^2$, $R^3$ et $R^4$ est un groupe alkyle ramifié, un groupe cycloalkyle substitué ou un groupe aryle substitué,

m est un nombre entier compris entre 2 et 10 ;

n est 0 ou 1 ;

x est 1 ou 2, et

y est 0 ou 1 avec la condition supplémentaire que $x + y = 2$.

**3.** Produit selon la revendication 2 dans lequel chaque groupe A est un groupe phényle substitué ou non.

**4.** Produit selon la revendication 2 ou 3 dans lequel X est $-SO_2-$, -SO-, -S-, -O-, -CO-, -COO-, -OCOO-, -CONH-, -OCONH-, $-SO_2NH-$ ou $-CR^5R^6$ où $R^5$ et $R^6$ sont chacun séparément un atome d'hydrogène, un groupe alkyle ou aryle.

**5.** Produit selon l'une quelconque des revendications 2 à 4 dans lequel les groupes $R^2$,$R^3$ et $R^4$ sont chacun séparément un groupe alkyle substitué ou non de 1 à 16 atomes de carbone, un groupe cycloalkyle substitué ou non de 3 à 6 atomes de carbone ou un groupe aryle substitué ou non de 6 à 18 atomes de carbone.

**6.** Produit selon la revendication 1 dans lequel l'organosilane a la formule

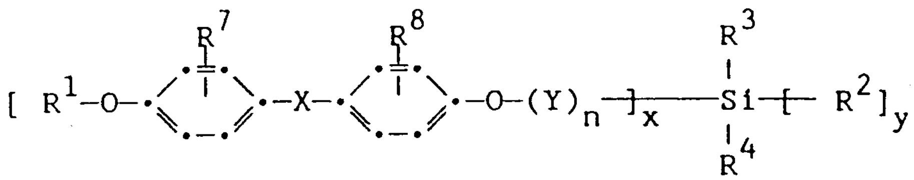

où
$R^1$,$R^2$,$R^3$,$R^4$,X,Y,n,x et y sont tels que définis dans la revendications 2 ; et
$R^7$ et $R^8$ sont chacun séparément un atome d'hydrogène, un groupe alkyle de 1 à 6 atomes de carbone, un groupe aryle de 6 à 18 atomes de carbone ou un halogène.

**7.** Produit selon l'une quelconque des revendications précédentes dans lequel la quantité d'organosilane est comprise entre 0,25 et 2,0 moles par mole de coupleur.

**8.** Organosilane de formule

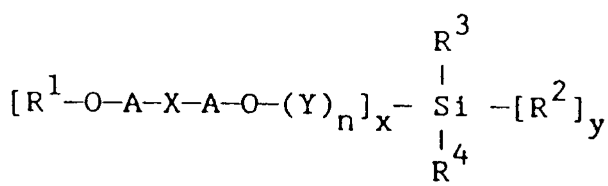

où
A est un groupe aryle substitué ou non,
X est une liaison chimique reliant directement les deux groupes A ou un groupe $-SO_2-$, -SO-, -CO-, -COO-, -OCOO-, -CONH-, -OCONH- ou $-SO_2NH-$ ;
Y est un groupe alkylène autre que l'éthylène, ou un groupe alkylèneoxy ;
$R^1$ est H, $HO(CH_2)_m-$ ou $R^2R^3R^4Si(Y)_n-$ ;
$R^2$, $R^3$ et $R^4$ sont chacun séparément un groupe alkyle, cycloalkyle ou aryle substitué ou non, avec la condition supplémentaire que si $n=0$, au moins un des groupes $R^2$, $R^3$ et $R^4$ est un groupe alkyle ramifié, un groupe cycloalkyle substitué ou un groupe aryle substitué,
m est un nombre entier compris entre 2 à 10 ;
n est 0 ou 1 ;
x est 1 ou 2, et
y est 0 ou 1 avec la condition supplémentaire que $x + y = 2$.

**9.** Organosilane selon la revendication 8 dans lequel chaque groupe A est un groupe phényle substitué ou non.

**10.** Organosilane selon la revendication 8 ou 9 dans lequel $R^2$, $R^3$ et $R^4$ sont chacun séparément un groupe alkyle substitué ou non de 1 à 16 atomes de carbone, un groupe cycloalkyle substitué ou non de 3 à 6 atomes de carbone ou un groupe aryle substitué ou non de 6 à 18 atomes de carbone.

**11.** Organosilane selon la revendication 8 de formule

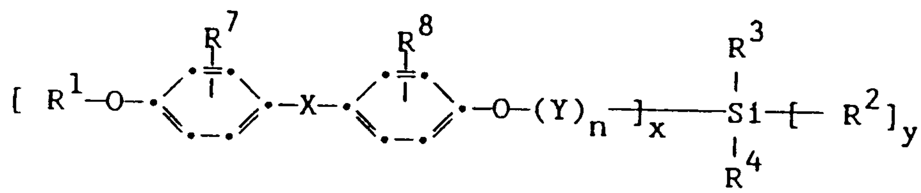

où

$R^1$,$R^2$,$R^3$,$R^4$,X,Y,n,x et y sont tels que définis dans la revendication 8 ; et

$R^7$ et $R^8$ sont chacun séparément un atome d'hydrogène, un groupe alkyle de 1 à 6 atomes de carbone, un groupe aryle de 6 à 18 atomes de carbone ou un halogène.

## Patentansprüche

**1.** Photographisches Material mit einem Träger, auf dem mindestens eine entwickelbare Silberhalogenidemulsionsschicht aufgetragen ist, wobei diese Schicht oder eine hierzu benachbarte wasserpermeable Schicht einen einen Farbstoff liefernden Kuppler enthält und das Material ferner in der Emulsionsschicht oder einer hierzu benachbarten wasserpermeablen Schicht zum Zwecke der Beschleunigung der Farbentwicklung ein Organosilan aufweist, in dem

a) ein oder zwei Aryloxygruppen direkt an das Siliciumatom des Silans gebunden sind oder indirekt über eine Alkylengruppe oder Alkylenoxygruppe,

b) jede Aryloxygruppe direkt an eine Arylgruppe gebunden ist, die durch eine aktive Gruppe substituiert ist oder indirekt durch eine einfache verbindende Gruppe und

c) die aktive Gruppe eine Hydroxy-, Hydroxyalkoxy-, Organosilyloxy-, Organosilylalkoxy- oder Organosilyloxyalkoxygruppe ist, wobei das Organosilan in basischem wäßrigen Medium nicht hydrolysierbar ist.

**2.** Material nach Anspruch 1, in dem das Organosilan der folgenden Formel entspricht:

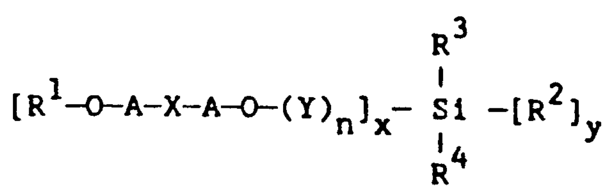

in der bedeuten:

| | |
|---|---|
| A | eine substituierte oder unsubstituierte Arylgruppe; |
| X | eine chemische Bindung, die die beiden A Gruppen direkt miteinander verbindet oder ein divalentes Bindeglied mit nicht mehr als drei Atomen, das die beiden A Gruppen voneinander trennt; |
| Y | eine Alkylengruppe, die von Ethylen verschieden ist, oder eine Alkylenoxygruppe; |
| $R^1$ | gleich H-, $HO(CH_2)_m$- oder $R^2R^3R^4$ $Si(Y)_n$-; |
| $R^2$, $R^3$ und $R^4$ | unabhängig voneinander substituierte oder unsubstituierte Alkyl-, Cycloalkyl- oder Arylgruppen, wobei gilt, daß, wenn n gleich 0 ist, mindestens eine der Gruppen $R^2$, $R^3$ und $R^4$ eine verzweigtkettige Alkylgruppe, eine substituierte Cycloalkylgruppe oder eine substituierte Arylgruppe ist: |
| m | eine ganze Zahl von 2 bis 10; |

| | |
|---|---|
| n | gleich 0 oder 1; |
| x | gleich 0 oder 1; und |
| y | gleich 0 oder 1 vorausgesetzt, daß x + y = 2 ist. |

3. Material nach Anspruch 2, in dem A jeweils eine substituierte oder unsubstituierte Phenylgruppe ist.

4. Material nach Anspruch 2 oder Anspruch 3, in dem X steht für $-SO_2-$, -SO-, -S-, -O-, -CO-, -COO-, -OCOO-, -CONH-, -OCONH-, $-SO_2NH-$ oder $-CR^5R^6$, worin $R^5$ und $R^6$ jeweils unabhängig voneinander für Wasserstoff, Alkyl oder Aryl stehen.

5. Material nach einem der Ansprüche 2 bis 4, in dem $R^2$, $R^3$ und $R^4$ jeweils unabhängig voneinander stehen für eine substituierte oder unsubstituierte Alkylgruppe mit 1 bis 16 Kohlenstoffatomen, eine substituierte oder unsubstituierte Cycloalkylgruppe mit 3 bis 6 Kohlenstoffatomen oder eine substituierte oder unsubstituierte Arylgruppe mit 6 bis 18 Kohlenstoffatomen.

6. Material nach Anspruch 1, in dem das Organosilan der folgenden Formel entspricht

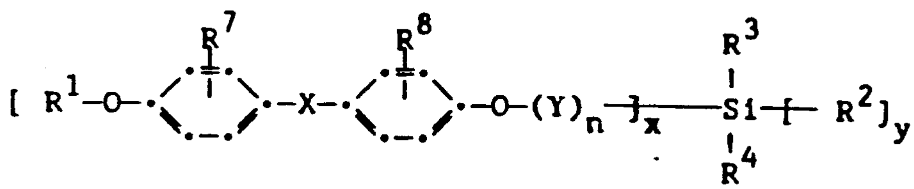

in der $R^1$, $R^2$, $R^3$, $R^4$, X, Y, n, x und y die in Anspruch 2 angegebene Bedeutung haben, und $R^7$ und $R^8$ jeweils unabhängig voneinander stehen für ein Wasserstoffatom, eine Alkylgruppe mit 1 bis 6 Kohlenstoffatomen, eine Arylgruppe mit 6 bis 18 Kohlenstoffatomen oder ein Halogenatom.

7. Material nach einem der vorstehenden Ansprüche, in dem das Organosilan in einer Menge von 0,25 bis 2,0 Molen pro Mol Kuppler vorliegt.

8. Organosilan der Formel:

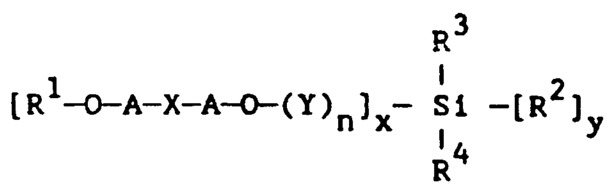

in der bedeuten:

| | |
|---|---|
| A | eine substituierte oder unsubstituierte Arylgruppe; |
| X | eine chemische Bindung, die die beiden A Gruppen direkt miteinander verbindet oder $-SO_2-$, -SO-, -CO-, -COO-, -OCOO-, -CONH-, -OCONH-, oder $-SO_2NH-$; |
| Y | eine von einer Ethylengruppe verschiedene Alkylengruppe oder eine Alkylenoxygruppe; |
| $R^1$ | gleich H-, $HO(CH_2)_m-$ oder $R^2R^3R^4\ Si(Y)_n-$; |
| $R^2$, $R^3$ und $R^4$ | jeweils unabhängig voneinander eine substituierte oder unsubstituierte Alkyl-, Cycloalkyl- oder Arylgruppe, wobei gilt, daß, wenn n gleich 0 ist, mindestens eine der Gruppen $R^2$, $R^3$ und $R^4$ eine verzweigtkettige Alkylgruppe ist, eine substituierte Cycloalkylgruppe oder eine substituierte Arylgruppe; |
| m | eine ganze Zahl von 2 bis 10; |
| n | gleich 0 oder 1; |
| x | gleich 1 oder 2 und |
| y | gleich 0 oder 1, vorausgesetzt, daß x + y = 2 ist. |

**9.** Organosilan nach Anspruch 8, in dem jede Gruppe A eine substituierte oder unsubstituierte Phenylgruppe ist.

**10.** Organosilan nach Anspruch 8 oder Anspruch 9, worin $R^2$, $R^3$ und $R^4$ jeweils unabhängig voneinander stehen für eine substituierte oder unsubstituierte Alkylgruppe mit 1 bis 16 Kohlenstoffatomen, eine substituierte oder unsubstituierte Cycloalkylgruppe mit 3 bis 6 Kohlenstoffatomen oder eine substituierte oder unsubstituierte Arylgruppe mit 6 bis 18 Kohlenstoffatomen.

**11.** Organosilan nach Anspruch 8 mit der Formel:

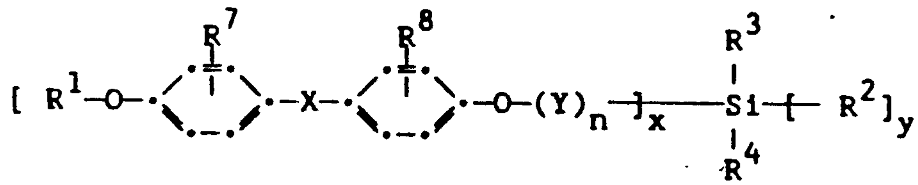

in der
$R^1$, $R^2$, $R^3$, $R^4$, x, y, n, x und y die in Anspruch 2 angegebene Bedeutung haben, und
$R^7$ und $R^8$ jeweils unabhängig voneinander stehen für ein Wasserstoffatom, eine Alkylgruppe mit 1 bis 6 Kohlenstoffatomen, eine Arylgruppe mit 6 bis 18 Kohlenstoffatomen oder ein Halogentaom.